# EUROPEAN PATENT APPLICATION

(11) **EP 4 550 296 A2**
(43) Date of publication of application: **07.05.2025**
(21) Application number: 24210352.1
(22) Date of filing: 01.11.2024
(51) Int. Cl.: G08G 5/34, G01S 13/00, G01S 13/89, G01S 13/93, G08G 5/32, G08G 5/53, G08G 5/70

(54) **APPARATUS, SYSTEMS, AND METHODS FOR AUTOMATED FLIGHT PATH VALIDATION**

(30) Priority: 03.11.2023 US 202363596104 P; 31.10.2024 US 202418932870
(71) Applicant: General Electric Company, Cincinnati, Ohio 45215 (US)
(72) Inventor: KELLEY, Douglas Drew, Evendale, 45241 (US)
(74) Representative: Openshaw & Co.

(57) **Abstract**

Apparatus, systems, methods, and computer readable media to validate a flight path are disclosed. An example apparatus includes memory; a processor to execute instructions to validate a flight path; and an output to provide a validation and associated assessment for the flight path. An example flight path validation processor includes: a flyability criteria engine (422); a flight physics model (424, 520); and a hazard assessment engine (426). An example A method of flight path validation includes: processing input related to the flight path; modeling the flight path; assessing the flight path with the model and associated flyability criteria and hazard; and determining a validation of the flight path.

## Description

### CROSS-REFERENCE TO RELATED APPLICATION

The present application claims priority to U.S. Provisional Patent Application Number 63/596,104, filed November 3, 2023. U.S. Provisional Patent Application Number 63/596,104 is hereby incorporated by reference herein for all purposes.

### FIELD OF THE DISCLOSURE

The present disclosure relates generally to flight path validation and, more particularly, to apparatus, systems, and methods for automated flight path validation.

### BACKGROUND

Airborne vehicles, such as fixed wing and helicopter aircraft, require Instrument Flight Procedure Validation (IFPV) including Performance-Based Navigation (PBN) and Area Navigation (RNAV). Such validation traditionally involves ground validation, pre-flight validation, and flight validation. Pre-flight validation can include simulator evaluation and obstacle assessment, for example. Existing validations are prone to human error and involve significant time to prepare, execute, and document.

### BRIEF DESCRIPTION OF THE DRAWINGS

A full and enabling disclosure of the presently described technology, including the best mode thereof, directed to one of ordinary skill in the art, is set forth in the specification, which makes reference to the appended figures, in which:
FIG. 1 illustrates an example decision support system which can select parameters for a flight management system.
FIG. 2 is an example implementation of the flight management system of FIG. 1.
FIG. 3 illustrates a manual validation process.
FIG. 4 illustrates an apparatus for automated flight path validation.
FIG. 5 illustrates an example implementation of the flight path validation processor of FIG. 4.
FIG. 6 illustrates an example processing of input data to generate an output accepting, prioritizing, and/or rejecting the flight path.
FIGS. 7-9 are block diagrams of some example processor platforms structured to execute instructions to implement the example elements disclosed and described herein.
FIG. 10 is a block diagram of an example software/firmware/instructions distribution platform (e.g., one or more servers) to distribute software, instructions, and/or firmware (e.g., corresponding to the example machine readable instructions to client devices associated with end users and/or consumers.

The figures are not to scale. Instead, the thickness of regions may be enlarged in the drawings. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" and/or "direct contact" with another part means that there is no intermediate part between the two parts.

### DETAILED DESCRIPTION

Reference now will be made in detail to embodiments or examples of the presently described technology, one or more examples of which are illustrated in the drawings. Each example is provided by way of explanation of the presently described technology, not limitation of the presently described technology. In fact, it will be apparent to those skilled in the art that various modifications and variations can be made in the presently described technology without departing from the scope or spirit of the presently described technology. For instance, features illustrated or described as part of one embodiment or example can be used with another embodiment or example to yield a still further embodiment or example. Thus, it is intended that the presently described technology covers such modifications and variations as come within the scope of the appended claims and their equivalents.

When introducing elements of various embodiments of the present disclosure, the articles "a," "an," "the," and "said" are intended to mean that there are one or more of the elements. As used herein, the terms "first", "second", and "third" may be used interchangeably to distinguish one component from another and are not intended to signify location or importance of the individual components. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Additionally, although individual features may be included in different examples or claims, these may possibly be combined, and the inclusion in different examples or claims does not imply that a combination of features is not feasible and/or advantageous.

Traditional IFPV involves ground validation, preflight validation, and flight validation. The series of validations include ground obstacle assessment, simulator validation, airborne obstacle assessment, and flight validation, for example.

Ground validation is a quality assurance review of the entire instrument flight path (IFP) package to identify areas that can impact the flyability and safety of the IFP (e.g., ARINC 424 coding errors, obstacles, obstruction evaluation/airport airspace analysis (OE/AAA) and charting, etc.). Pre-flight validation includes an obstacle assessment and may include a simulator evaluation. Flight validation involves review of simulator and obstacle evaluations and consideration of any particular training, operational, and/or equipment requirements.

Flight validation involves comparison of an aircraft navigation database, chart depiction, Federal Aviation Administration (FAA) form and/or equivalent form, and flight inspection graphic. A flyability assessment is conducted to determine safe flying of all segments of the IFP accounting for speeds, climb gradients, descent gradients, coded flight path/glide path angles, and bank angles, for example. Controlling obstacle verification provides an assurance that a controlling obstacle has been correctly identified for each segment of the IFP. Additionally, airport/heliport infrastructures, such as markings, lighting, and communications, are verified to be in place and operative. Further, other operational factors, such as aircraft equipment (e.g., a Terrain Avoidance and Warning System (TAWS)/Enhanced Ground Proximity Warning System (EGPWS)), performance limitations such as minimum and maximum temperature limits, and human factors/cockpit workload, are verified, for example.

While current processes use pilots, full motion simulators, and aircraft to provide a subjective assessment, these intensive, manual assessments are prone to human error and take significant time to prepare, execute, and document. Certain examples leverage high-resolution terrain data and/or navigation charts with flight simulation to provide flight inspection and flight validation of instrument flight procedures. Certain examples eliminate pilot manual evaluation of a flight path prior to publication of that flight path for usage by aircraft (e.g., human-piloted aircraft, automatically-piloted aircraft, etc.).

Traditional flight path validation processes may take three to six months to complete, which delays the activation of new flight paths for use. Additionally, existing flight paths must be periodically recertified for continued use. Depending on the jurisdiction, that period can be anywhere from six months to five years (e.g., at least eighteen months, etc.). Such a manual, human-driven process cannot be executed more quickly or reliability due to the number of steps and human factors involved and introduces risk. Certain examples address the technical shortcomings of the manual, human-driven process by providing a platform or infrastructure to support automated submission, processing, and validation of new flight paths as well as recertification of existing flight paths for continued use. Certain examples provide new technologies and associated computing processes with simulation, modeling, sensors, imaging, aircraft data, etc., engaged with a flight management system (FMS) to drive flight path validation.

For example, geospatial analysis of high-resolution, synthetic aperture radar (SAR) data replaces analysis of flight path surfaces in comparison to: 1) obstacle database(s); 2) ground obstacle survey(s); and 3) observations of obstacles during flight validation. Flyability analysis is conducted by assessing multiple four-dimensional (4D) trajectories generated by existing FMS software under various weather (e.g., winds, temperatures, precipitation, etc.) and abnormal setups (e.g., engine out, loss of navigation, etc.) to assess flyability against a predefined set of parameters, for example. Such flyability analysis eliminates the need for a pilot to assess flyability in an aircraft or simulator. Objective, rather than subjective, electronic analysis provides technically superior flight path information, accurate analysis, consistency, and reliable (re)verification. Artificial intelligence (AI) models and/or other expert electronic systems can eliminate human error and omission while reducing time-to-value to near zero. Such models and associated systems can be provided in a software-as-a-service (SaaS) package, enabling dynamic, real-time (or near-real-time) validation of flights for conventional and unmanned aerial vehicles alike.

In certain examples, automated modeling and assessment of ground obstacles, flight occurrences, procedure complexity, workload, and feedback are provided to enable dynamic generation and validation of a flight path along with real-time or near real-time assessment of the flight path prior to flight by an aircraft, such as a fixed-wing aircraft, a rotary wing aircraft, an urban air mobility vehicle, a drone, etc. As such, a flight path validation system (e.g., an IFPV system) can communicate with a flight management system (FMS) to generate, validate, and execute a flight path (e.g., via human-assisted instrument flight, automated instrument flight, etc.) on demand, for example. In certain examples, a flight path verification process can be executed to augment and/or otherwise assist a traditional manual verification (referred to herein as an assistive flight path verification system, apparatus, and/or method).

In certain examples, rather than a series of separate processes, flight path validation proceeds in a single process. The example validation process operates on a procedure definition file, which provides boundaries and altitude floor that must be protected in instrument flight.

The process determines a lateral containment zone and a lower altitude limit or floor for the instrument flight procedure being validated. By leveraging topographic data, imaging, radar, etc., the containment zone associated with the flight plan can be evaluated to identify any object that would be a conflict for an aircraft flying within the containment zone. The flight plan can be evaluated segment by segment. Rather than manual pilot observation or survey, an automated validation process processes high resolution SAR data from satellites (e.g., updated weekly, daily, monthly, etc.) and performs a geospatial comparison of the process radar data with a procedure definition associated with the containment zone of the proposed flight path. Any penetration of the containment zone by an external object's surface is identified and noted.

Rather than actual flight and testing, a flight management system (FMS) creates a set of test scenarios in which expected temperature extremes, wind extremes, engine out events, etc., accounting for different aircraft types of a same or different category, different entry vectors, different headings, different altitudes, different energy levels, different airspeeds, etc. The FMS is a component of a flyability assessment system, for example. The FMS processes the various test scenarios to identify whether error(s) occurred, any disconnect, instance of the aircraft exceeding a maximum bank angle, etc. The FMS can determine whether such error/occurrence would cause an aircraft to move outside of the defined containment, for example. In certain examples, the FMS performs a physics-based modeling and analysis of the containment environment and introduced outside factors. The FMS drives a physics model against a plurality of scenarios (e.g., a thousand scenarios, ten thousand scenarios, etc.) that test the extreme limits that an aircraft could encounter along the flight plan. As a flight path validation model is provided (e.g., via the FMS, etc.).

In certain examples, a complexity and/or workload assessment is also performed. Complexity assessment and workload assessment can be proportionate or inversely proportionate. In certain examples, a weighted factor analysis is performed and/or an artificial intelligence (AI) model is trained, with different features weighing differently in favor of the workload or the complexity. Complexity can be assessed from a start of the flight path even if the flight path has never been flown before. The complexity assessment also looks at back-to-back turns, environment (e.g., using a center runway of a three-runway airport versus a single runway, etc.), etc., using maps and images to determine whether roads align with a given runaway, etc. The workload assessment reviews flight operations data including controller conversations, pilot workload, and associated flight phase (e.g., a further phase from the runway is better than a flight phase close to runway, etc.), etc., to generate a score quantifying the workload. For example, a flight path requiring use of drag devices to meet altitude constraints is scored as requiring additional pilot workload as opposed a flight path in which altitude constraints can be made without the use of drag devices. Similarly, a flight path with multiple altitude constraints, requiring additional pilot input, is scored as more complex than a flight path with one or zero altitude constraints, for example.

In certain examples, navigational aid alignment is also evaluated. For example, a navigational aid is evaluated to determine whether that navigational aid is accurately transmitting. Flight operations quality assurance (FOQA) data (e.g., fuel management and flight efficiency data, maintenance data, procedural safety data, block time analysis and ground turn optimization data, etc.) can be analyzed to determine position based on a navigational aid as well as based on a Global Positioning System (GPS) to determine whether something in the flight plan poses a risk to navigational aid alignment. For example, a risk to navigational aid alignment can be understood at a particular airport.

Additional assessments forming part of a flight plan validation can include a chart review (e.g., a comparison of a pilot's chart to a procedure definition and associated coding). Such a comparison can be driven by artificial intelligence (AI) such as a machine learning model, etc. Communication (e.g., quality, content, etc.) can also be assessed (e.g., ultra high frequency (UHF), very high frequency (VHF), etc.). An assessment of an enhanced ground proximity warning system (EGPWS) can also be performed. For example, risk can be assessed and an EGPWS procedure can be scored. For example, for a first flight path placed in close proximity to terrain, for which an EGPWS algorithm is expected to issue a terrain warning, that first flight path can be scored poorly with respect to safety while a second flight path that is placed sufficiently far away from the terrain to avoid an EGPWS alert is scored as being safer than the first flight path.

As such, an automated, quantifiable process is provided via an infrastructure that is objective, rather than subjective. The infrastructure or system captures information from satellite, imaging, and/or other sensor(s), etc., to generate high-resolution terrain data, FOQA data, etc., and provides simulation and knowledge-driven processing of the data to provide a binary output of approval/rejection of a proposal flight plan along with flight inspection and flight validation of instrument flight procedures. The system can be used to validate a flight path, augment validation of a flight path, revalidate a flight path, etc. The system can validate a new procedure against an existing runway, against a particular aircraft's capabilities, etc.

In certain examples, processes and systems disclosed herein can be implemented in conjunction with an FMS and/or other aircraft systems, which can drive flight path validation, supplement flight path validation, use a validated flight path in operation, etc. The FMS can be used to manage aircraft flight control, generate flight profile data, and provide navigational information such as flight paths designated by waypoints that are represented by navigational location coordinates. Additionally, the FMS can be configurable to provide aircraft engine throttle settings for manual or automatic control of the engine thrust, for example.

The FMS computes a detailed flight trajectory and controls the navigation of the aircraft. The trajectory defines the lateral and vertical profile including aircraft speeds along the profile and is developed by the FMS using the flight plan and other constraints such as altitude and speed restrictions, etc. The FMS uses the current aircraft state and atmospheric data along with all crew-entered or Airline Operations Center (AOC) up-linked data to generate the trajectory. Using various sensors to determine the exact position of the aircraft, the FMS guides the aircraft along the trajectory through the Flight Control System. For example, during aircraft takeoff and cruising, the FMS may determine engine thrust requirements to sufficiently elevate the plane on lift off from the runway such that the aircraft sufficiently climbs at a pitch rate, typically according to a programmed schedule or requirements set forth by the air traffic control and then to level off and finally descend for landing.

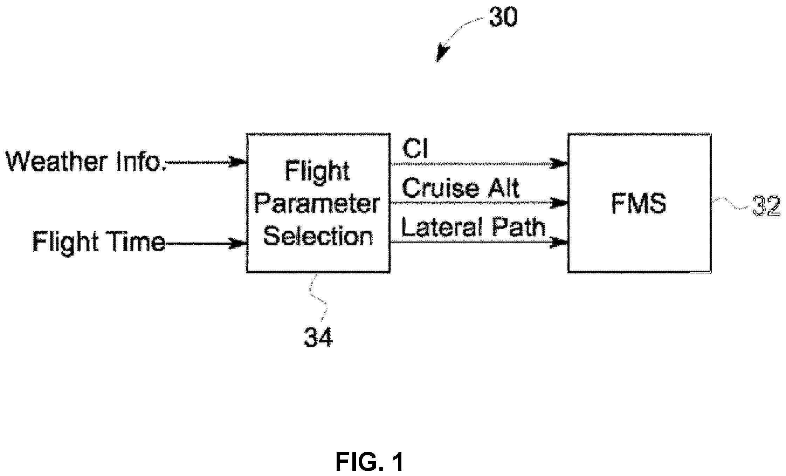

FIG. 1 illustrates an example decision support system 30 which can select parameters for an FMS 32, which may be fixed or changed dynamically during the flight path. The FMS 32 receives initial and optionally updated parameter information from a flight parameter selection module 34. Information such as weather information and/or flight time information (e.g., departure time, current time, and/or estimated arrival time) are received by the flight parameter selection module 34, which outputs control parameters to the FMS 32. For example, a cruise altitude and/or lateral flight path may be set or updated using the flight parameter selection module 34. The flight parameter selection module 34 may be implemented in hardware, software or a combination thereof.

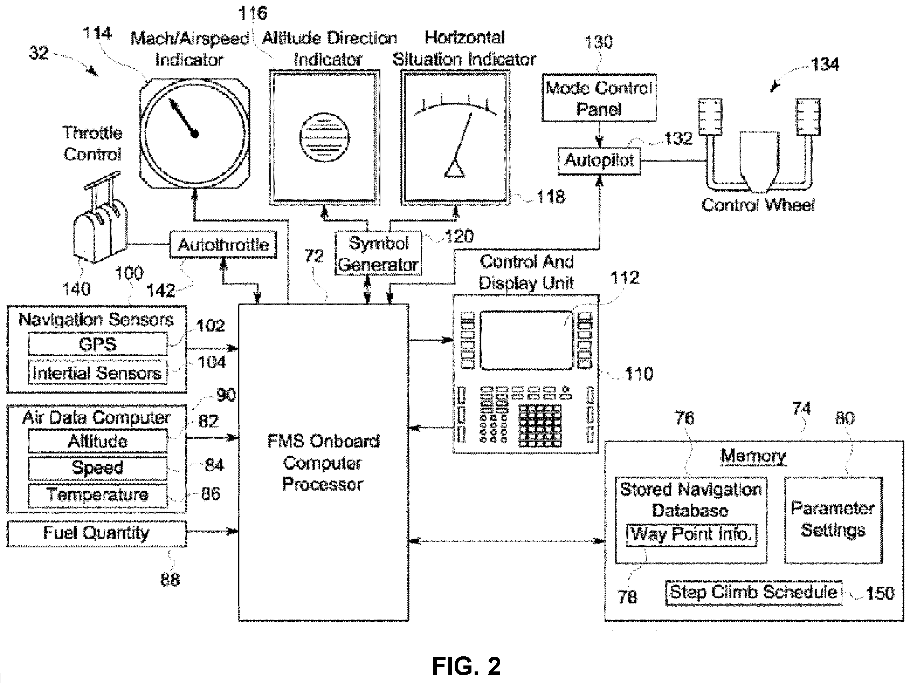

FIG. 2 illustrates an example implementation of the FMS 32 that can be used in the validation of a flight path, control of the flight of the aircraft 52, etc. In the example of FIG. 2, the FMS 32 includes an FMS onboard computer processor 72 and a memory 74. The memory 74 includes a stored navigation database 76 that stores aircraft navigation information including determined waypoint information 78, which may be points along the flight plan where one or more of the lateral and vertical profiles for a flight of the aircraft 52 is changed. Thus, the memory 74 may include navigational waypoints and corresponding aircraft control parameters 80 to be changed by the FMS onboard computer processor 72 during flight as determined by one or more various embodiments, such as using the flight parameter selection module 34.

The onboard computer processor 72 receives various inputs including sensed aircraft altitude 82, sensed aircraft speed 84, and sensed air temperature 86 from an air data computer 90. Additionally, the processor 72 receives inputs from navigation sensors 100, such as location coordinates from a global positioning system (GPS) 102 and inertial data from inertial sensors 104. Further, the processor 72 receives other inputs from other sensors such as fuel quantity 88, and other sensed variables as should be evident to those skilled in the art.

The onboard computer processor 72 is further shown in communication with a control and display unit (CDU) 110 having a display 112. It should be appreciated that the control and display unit 110 can be a human machine interface that allows pilots to input data and to receive output data. For example, output data indicating the computed engine thrust may be provided in display pages presented on display 112 to allow a pilot of the aircraft to operate the aircraft pursuant to the output data provided by the flight management system 32.

The FMS 32 is further shown having a Mach/airspeed indicator 114, an altitude direction indicator 116, and a horizontal situation indicator 118. A symbol generator 120 is coupled between the processor 72 and each of the indicators 116 and 118. The FMS 32 also includes a mode control panel 130 providing an output to an autopilot 132, which is also in communication with the processor 72. The autopilot 132 may be part of a flight control system and may operate a control wheel 134 in an automatic piloting mode.

The FMS 32 is further shown including a throttle control 140 for controlling the engine throttle. The throttle control 140 may be manually actuated by a pilot of the aircraft in a manual mode. In an automatic or instrument-driven flight control mode, the throttle control 140 may be automatically controlled by an auto throttle signal 142 provided by the processor 72. It should be appreciated that the processor 72 may output command signals for controlling the aircraft with the computed throttle value by providing output commands via the display 112 or by automatically controlling the throttle control 140 via the auto throttle signal 142.

The FMS 32 shown and described herein is one example of a flight management system that may be configured to perform various embodiments to control an aircraft during aircraft departure, cruising and arrival procedures. In some examples, a step climb schedule is stored in the memory 74. It should be appreciated that the memory 74 and the stored navigation database 76 may include an existing navigation database in an existing flight management system that is upgraded to perform the climb schedule or use one or more embodiments. In certain examples, the memory 74 stores a flight path configuration to be processed, simulated, and validated such as by the processor 72, etc. As such, the FMS 32 can drive flight path validation and/or assist another external processor with the validation of a fight plan (e.g., validation of a new flight path, revalidation of an existing flight path, etc.).

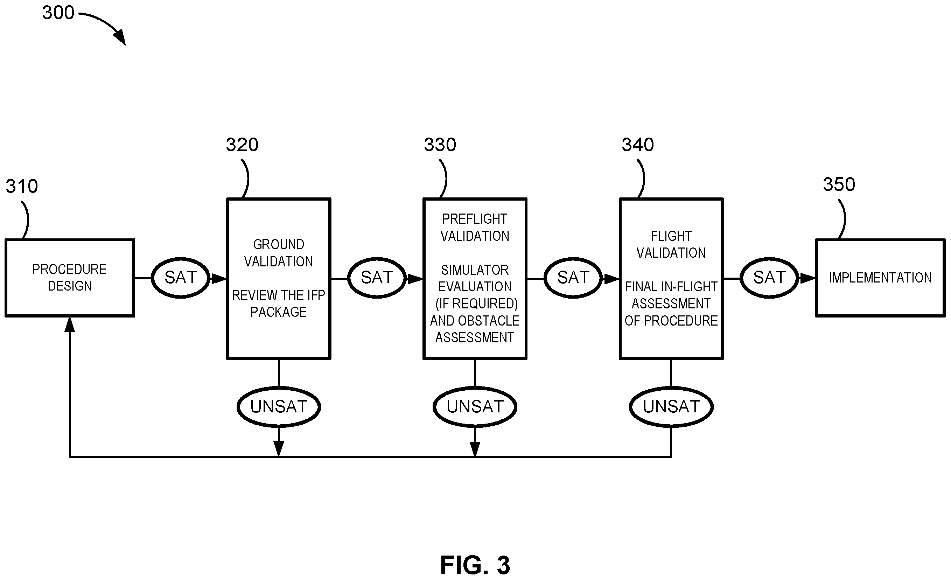

FIG. 3 illustrates an example prior manual validation process 300 including manual procedure design 310, ground validation 320, preflight validation 330, and flight validation 340. As shown in the example of FIG. 3, an instrument flight path (IFP) package is manually assembled to the satisfaction of a human reviewer in the procedure design 310. The IFP package is provided to the human reviewer for ground validation 320. If the reviewer determines that IFP package is satisfactory with respect to ground interference and other subjective and/or objective criterion(-ia), then preflight validation 330 is conducted. During the preflight validation 330, a human user assesses any obstacles in the flight path and can also simulate the flight path (e.g., under various normal, non-normal, and rare-normal conditions). If satisfactory, then flight validation 340 involves a user performing an in-flight assessment of procedure at implementation 350 (e.g., with FAA approval). If the human user finds any aspect to be unsatisfactory, then the procedure design 310 is modified.

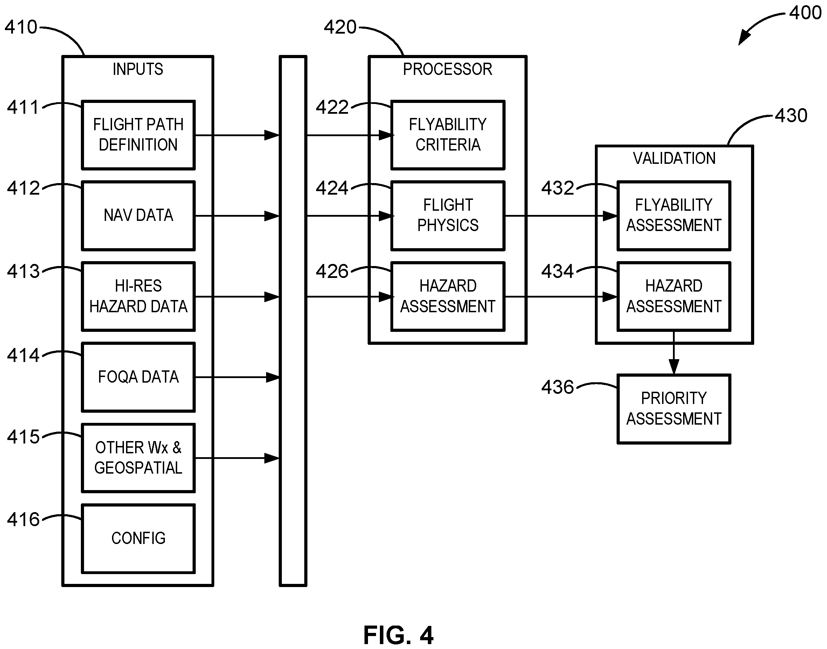

In contrast, FIG. 4 illustrates an infrastructure 400 for automated flight path validation. The example infrastructure 400 includes a set of inputs 410 to a processor 420 (also referred to as processor circuitry) to generate a validation 430. The example inputs 410 include a flight path definition 411, aircraft navigation data 412 (e.g., ARINC 424, etc.), high-resolution hazard data 413, FOQA data 414, other weather and geospatial data 415, and configuration information 416. The example processor 420 includes a flyability criteria engine 422, a flight physics model 424, and a hazard assessment engine 426. The flyability criteria engine 422, the flight physics model 424, and the hazard assessment engine 426 process all or part of the input 410 to drive validation 430 of the flight path. The example validation 430 includes a flyability assessment 432 and a hazard assessment 434. The validation 430 also drives a priority assessment 436, for example.

In operation, the example flight path validation processor 420 generates flyability criteria using the flyability criteria engine 422 according to the data 412-415, definition 411, and configuration 416 provided by the input 410. The flyability criteria engine 422 can be trained on data such as the data 412-415, tested with data such as the data 412-415, and deployed to process the data 412-415 to evaluate the flyability of a flight path by an aircraft, for example. The flight physics model 424 can also be trained on data such as the data 412-415, tested with data such as the data 412-415, and deployed to process the data 412-415 to model flight of an aircraft along a target flight path being validated, for example. In certain examples, the flight physics model 424 uses Newtonian physics to simulate aircraft flight. If an aircraft is flying at a given velocity with a given wind speed and performs a coordinated turn at a given bank angle while in level flight, the flight physics model 424 determines that aircraft will fly a specific ground path within the constraints of the autopilot system regardless of aircraft and engine type. In practice, different aircraft have different constraints and characteristics that can modify the prediction, but physics, as opposed to a more subjective framework, is the foundation of the path prediction by the flight physics model 424.

The hazard assessment engine 426 leverages the hazard data 413 with respect to the flight path definition 411. For example, an input to the hazard assessment engine 426 can include high-resolution Synthetic Aperture Radar (SAR) terrain data obtained from satellites. Other hazards can be part of a dynamic system such as convective weather or temporary airspace restrictions obtained from existing distribution channels. Hazard data is collected, cleaned, and assessed for areas where flight should be and must be avoided. The hazard assessment engine 426 calculates aircraft proximity to terrain and obstacles such as trees, towers, and buildings in four dimensions (including time). Flight paths approaching hazardous areas can be weighted by the hazard assessment engine 426 as being less ideal or even rejected entirely for certain circumstances where the flight path and high terrain intersect, for example.

As shown in the example of FIG. 4, the flight physics model 424 is used to generate the flyability assessment 432 as part of the validation output 430. The flyability assessment 432 is generated by modeling, using the flight physics model 424, the proposed flight path based on input of the flight path definition 411, data 412-415, and configuration 416. The hazard assessment engine 426 generates a hazard assessment 434 as part of the validation output 430 based on the high-resolution hazard data 413, other data 412, 414, 415, along the flight path defined by the flight path definition 411 as modified by configuration setting(s) 416, for example. The flyability assessment 432 can be modified by the hazard assessment 434 to determine the priority assessment 436, for example.

For example, a flight path in close proximity to new construction can be ranked higher in the priority assessment than a flight path in an undeveloped area. A flight path that recently underwent a validation activity can be scored lower for needing an assessment. The priority assessment is an assessment of risk and, as such, may be used to help determine whether further manual/existing flight path validation should take place and how soon the manual assessment should be performed.

The priority assessment 436 can be used to drive a ranking or other prioritization of the target flight path. For example, a first flight path may be validated but, based on a high hazard assessment 434, may be given a higher priority assessment 436 when compared to a second flight path that is also validated with a lower hazard assessment 434. For example, the hazard assessment can be scored higher based on factors such as proximity to high terrain, buildings, towers, and other flight path hazards. Other hazards can include proximity of the flight path to other traffic at the airport or nearby airports, proximity to areas of known communications degradation, etc.

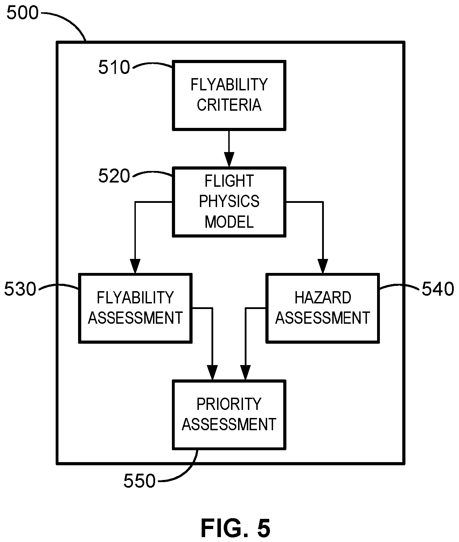

In certain examples, the processor 420 and validation 430 can be packaged as a flight path validation processor 500, that can be implemented in and/or with an FMS, such as the example FMS 32. FIG. 5 illustrates an example implementation of the flight path validation processor 500 including flyability criteria 510, a physics flight model 520, a flyability assessment 530, a hazard assessment 540, and a priority assessment 550.

In operation, the flight path validation processor 500 models and assesses ground obstacles, flight occurrences, procedure complexity, workload, and feedback to validate a flight path based on a definition file including the flyability criteria 510. The flyability criteria 510 can define a containment zone including lower and upper altitude limit(s), lateral boundary(-ies), etc. The flight physics model 520 ensures that the aircraft can remain within the containment zone under any normal, rare-normal, and non-normal flight conditions such as extreme winds and temperatures, engine loss, etc. The flight physics model 520 simulates flight of an aircraft according to the flight path within the defined containment zone. High-resolution terrain data, high-resolution synthetic aperture radar data, FOQA data, etc., can be used to train, test, and operate the model 520 with respect to the flight path. As such, the model 520 can be used to identify object(s) conflicting with the flight path being validated. For example, high resolution synthetic aperture radar (SAR) data from satellites (e.g., updated weekly, daily, monthly, etc.) can be used to perform a geospatial comparison of the process radar data with a procedure definition associated with the containment zone of the proposed flight path. Penetration of the containment zone by an external object is identified and noted in the flyability assessment 530 and the hazard assessment 540 generated using the model 520.

For example, a physical object such as a building, tower, terrain (e.g., mountain, tree, etc.), etc., can penetrate the containment zone defined by the flight path definition, and the flight path can be rejected during the hazard assessment. Similarly, even if the containment zone is clear of hazards, the aircraft can be assessed as not being capable of remaining within the defined containment under certain flight conditions such as extreme winds or loss of engine, for example. Such a flight path can be rejected based on the flyability assessment. However, the flyability assessment can be rejected for a cumulation of less severe considerations such as an unacceptable pilot workload requirement, proximity to other known traffic, etc. An accumulation of flight path issues can exceed a tolerance threshold for acceptability, for example, and then be rejected.

The flyability assessment 530 and the hazard assessment 540 are combined and compared by the processor 500 to evaluate and determine a priority assessment 550 for the flight path. The presence of an error, exceeding a limit (e.g., floor, ceiling, bank angle, etc.), etc., is provided in the flyability assessment 530 (e.g., how flyable is the given flight path for a piloted aircraft, automated aircraft, etc.) and the hazard assessment 540 (e.g., what hazard(s) exist along this flight path, etc.), for example. The processor 500 can model 520 a variety of scenarios to generate different flyability assessments 530 and hazard assessments 540 to determine an ultimate priority assessment 550 associated with the flight path.

Factors such as complexity, workload, etc., can factor into the flyability assessment 530 and help drive the priority assessment 550, for example. In certain examples, the processor 500 uses the model 520 to perform a weighted factor analysis, with different features weighing differently in favor of the workload or the complexity. Alternatively or additionally, navigation data, focus data, communication, etc., can be factored in the analysis. The priority assessment 550 generated by the flight path validation processor 500 can be used to validate a flight path, augment validation of a flight path, revalidate a flight path, etc. The processor 500 can validate a new flight path against an existing runway, against a particular aircraft's capabilities, etc. In certain examples, an existing flight path can be revalidated by following the same process as a new flight path validation. In some examples, an existing flight path can be dynamically validated such that current and forecast weather conditions are factored into the assessment.

While example implementations are illustrated in conjunction with FIGS. 4-5, elements, processes and/or devices illustrated in conjunction with FIGS. 4-5 can be combined, divided, re-arranged, omitted, eliminated and/or implemented in any other way. Further, components disclosed and described herein can be implemented by hardware, machine readable instructions, software, firmware and/or any combination of hardware, machine readable instructions, software and/or firmware. Thus, for example, components disclosed and described herein can be implemented by analog and/or digital circuit(s), logic circuit(s), programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the components is/are hereby expressly defined to include a tangible computer readable storage device or storage disk such as a memory, a digital versatile disk (DVD), a compact disk (CD), a Blu-ray disk, etc. storing the software (including computer- and/or other machine-readable instructions) and/or firmware.

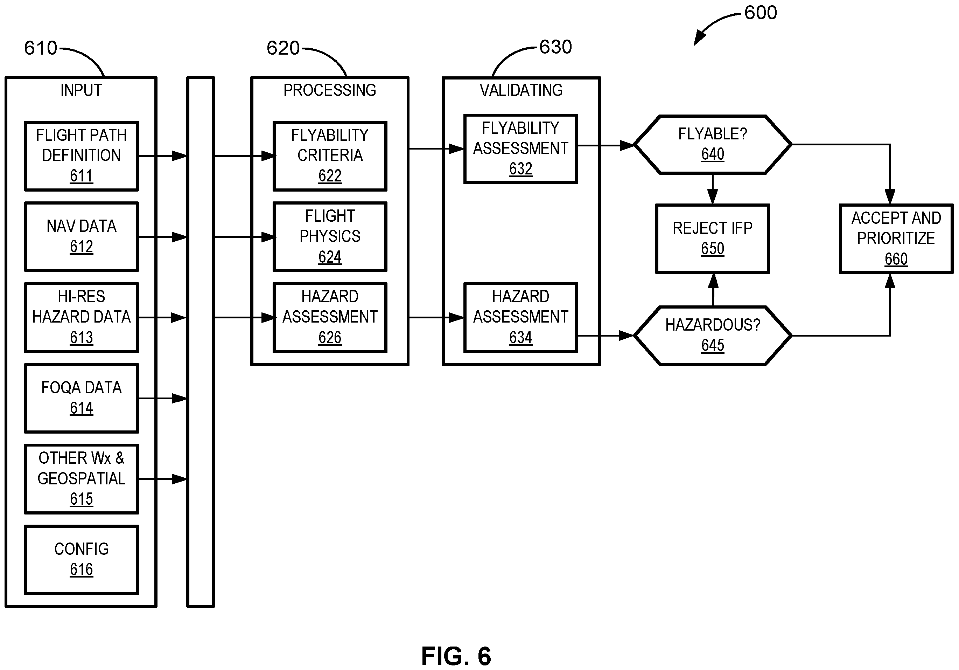

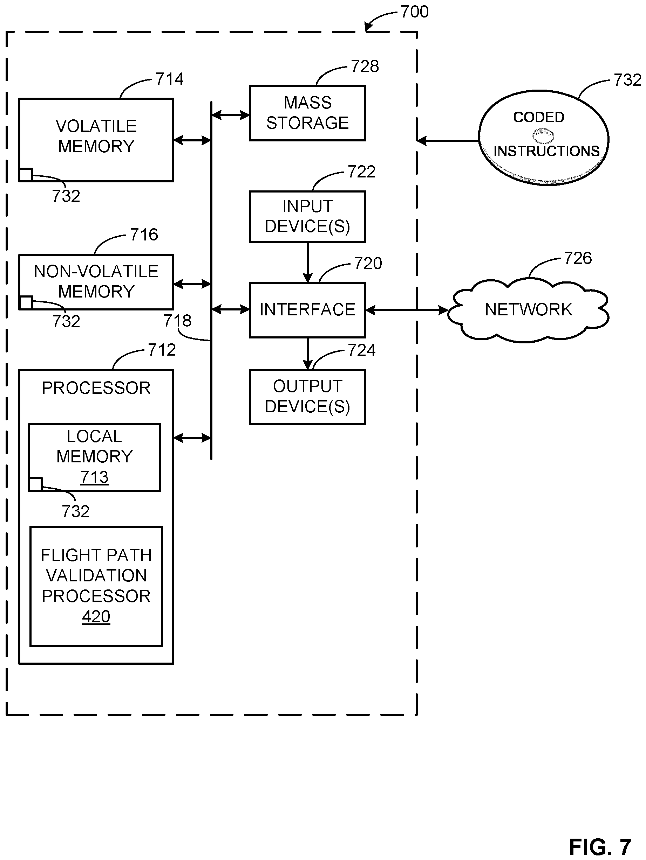

Flowcharts representative of example hardware logic, machine readable instructions, hardware implemented state machines, and/or any combination thereof for programming the FMS and/or other flight path validation processor are shown in FIG. 6. The machine readable instructions may be one or more executable programs or portion(s) of an executable program for execution by a computer processor such as the processor 712 shown in the example processor platform 700 discussed below in connection with FIG. 7. The program may be embodied in software stored on a non-transitory computer readable storage medium such as a CD-ROM, a floppy disk, a hard drive, a DVD, a Blu-ray disk, or a memory associated with the processor 712, but the entire program and/or parts thereof could alternatively be executed by a device other than the processor 712 and/or embodied in firmware or dedicated hardware. Further, although the example program is described with reference to the flowchart illustrated in FIG. 6, many other methods of programming the FMS and/or other flight path validation processor may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

As mentioned above, the example process(es) disclosed and described herein may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example process(es) can be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 6 illustrates an example processing 600 of input data to generate an output accepting, prioritizing, and/or rejecting the flight path. As set forth in the example of FIG. 6, a plurality of inputs 610 are processed 620 to validate 630 a flight path. The inputs 610 can include a definition of the flight path 611 (e.g., a new flight path, a current flight path, etc.), aircraft navigational data 612 (e.g., ARINC 424 data, etc.), high-resolution hazard data 613 (e.g., imaging, sensor, etc.), FOQA data 614 (e.g., fuel management and flight efficiency data, maintenance data, procedural safety data, block time analysis and ground turn optimization data, etc.), other geospatial data 615 (e.g., GPS, communications, etc.), configuration information 616, etc.

The input 610 is processed 620 to generate flyability criteria 622 (e.g., boundaries of an aircraft flight containment zone, altitude limit(s), speed limit(s), etc.) against which to evaluate the flight path. Processing 620 also generates a flight physics model 624 with which to model/simulate and evaluate the flight path for one or more example aircraft within the bounds of the flyability criteria 622. The processing 620 also generates a hazard assessment 634 based on the flight physics model 624 and the input 610. For example, obstacles and/or other objects in the flight path can be identified and an associated risk of contact and/or other hazard can be determined.

The processing 620 is then validated 630 to determine a flyability assessment 632 and a hazard assessment 634, for example. For example, based on the flyability criteria 622 and the flight physics model 624, an assessment 632 of how flyable the flight path is by one or more aircraft is generated. Based on the flight physics model 624 and the hazard assessment 626, an assessment 634 of likely hazard on the flight path is also generated, for example. The flight path can then be scored, prioritized, etc., based on the assessments 632, 634.

For example, the flyability assessment 632 can be evaluated to determine whether or not the flight path is flyable 640. If not, then the instrument flight path (IFP) proposal is rejected 650. The flight path is also evaluated 645 to determine whether the flight path is hazardous based on the hazard assessment 634. If the flight path is hazardous, then the IFP 650 is rejected. If the flight path is flyable and not hazardous, then the flight path is accepted and prioritized 660 with respect to other flight paths, for example.

In certain examples, the flight physics model 424, 524, 624 can be implemented and assessed using one or more artificial intelligence models, such as machine learning models, etc. The flight physics model 424, 524, 624 can be trained and tested on prior flight path and associated validation data to evaluate aircraft movement in a containment zone, recognize hazards, parse image and sensor data to identify objects and anomalies, correlate conditions with outcomes, etc.

FIG. 7 is a block diagram of an example processor platform 700 structured to execute instructions to implement the example elements disclosed and described herein. The processor platform 700 can be, for example, a server, a personal computer, a mobile device (e.g., a cell phone, a smart phone, a tablet such as an iPadTM), a personal digital assistant (PDA), an Internet appliance, or any other type of computing device. The example processor platform 700 can be used to implement the example FMS and/or other flight path validation processor, for example.

The processor platform 700 of the illustrated example includes a processor 712 (also referred to as processor circuitry). The processor 712 of the illustrated example is hardware. For example, the processor 712 can be implemented by integrated circuits, logic circuits, microprocessors or controllers from any desired family or manufacturer.

The processor 712 of the illustrated example includes a local memory 713 (e.g., a cache) (which can form part of memory circuitry). The example processor 712 of FIG. 7 executes instructions from the memory 713, etc. The processor 712 of the illustrated example is in communication with a main memory (also referred to as memory circuitry) including a volatile memory 714 and a non-volatile memory 716 via a bus 718. The volatile memory 714 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 716 may be implemented by flash memory and/or any other desired type of memory device. Access to the main memory 714, 716 is controlled by a clock controller.

The processor platform 700 of the illustrated example also includes an interface circuit 720. The interface circuit 720 may be implemented by any type of interface standard, such as an Ethernet interface, a universal serial bus (USB), and/or a PCI express interface.

In the illustrated example, one or more input devices 722 are connected to the interface circuit 720. The input device(s) 722 permit(s) a user to enter data and commands into the processor 712. The input device(s) can be implemented by, for example, a sensor, a microphone, a camera (still or video), a keyboard, a button, a mouse, a touchscreen, a track-pad, a trackball, isopoint and/or a voice recognition system.

One or more output devices 724 are also connected to the interface circuit 720 of the illustrated example. The output devices 724 can be implemented, for example, by display devices (e.g., a light emitting diode (LED), an organic light emitting diode (OLED), a liquid crystal display, a cathode ray tube display (CRT), a touchscreen, a tactile output device, and/or speakers). The interface circuit 720 of the illustrated example, thus, typically includes a graphics driver card, a graphics driver chip or a graphics driver processor.

The interface circuit 720 of the illustrated example also includes a communication device such as a transmitter, a receiver, a transceiver, a modem and/or network interface card to facilitate exchange of data with external machines (e.g., computing devices of any kind) via a network 726 (e.g., an Ethernet connection, a digital subscriber line (DSL), a telephone line, coaxial cable, a cellular telephone system, etc.).

The processor platform 700 of the illustrated example also includes one or more mass storage devices 728 for storing software and/or data (which can also form part of the memory circuitry). Examples of such mass storage devices 728 include floppy disk drives, hard drive disks, compact disk drives, Blu-ray disk drives, RAID systems, and digital versatile disk (DVD) drives.

The coded instructions 732 representing instructions executable by the processor 712 can be stored in the mass storage device 728, in the volatile memory 714, in the non-volatile memory 716, and/or on a removable tangible computer readable storage medium such as a CD or DVD, for example.

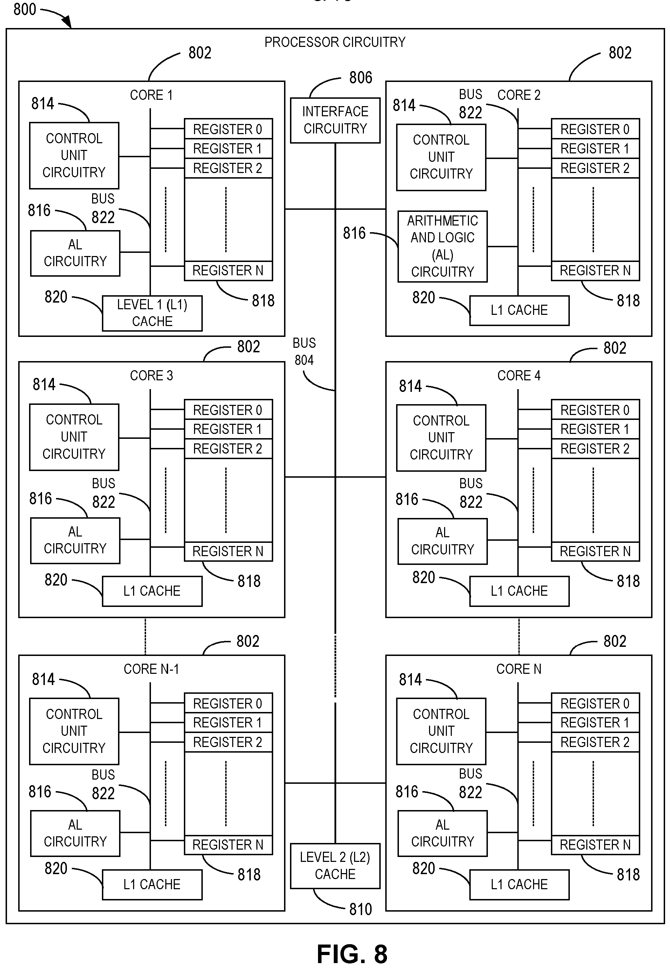

FIG. 8 is a block diagram of an example implementation of the processor circuitry 712 of FIG. 7. In this example, the processor circuitry 712 of FIG. 7 is implemented by a microprocessor 800. For example, the microprocessor 800 may implement multi-core hardware circuitry such as a CPU, a DSP, a GPU, an XPU, etc. Although it may include any number of example cores 802 (e.g., 1 core), the microprocessor 800 of this example is a multi-core semiconductor device including N cores. The cores 802 of the microprocessor 800 may operate independently or may cooperate to execute machine readable instructions. For example, machine code corresponding to a firmware program, an embedded software program, or a software program may be executed by one of the cores 802 or may be executed by multiple ones of the cores 802 at the same or different times. In some examples, the machine code corresponding to the firmware program, the embedded software program, or the software program is split into threads and executed in parallel by two or more of the cores 802. The software program may correspond to a portion or all of the machine readable instructions and/or operations represented by the flowchart of FIG. 6, for example.

The cores 802 may communicate by an example bus 804. In some examples, the bus 804 may implement a communication bus to effectuate communication associated with one(s) of the cores 802. For example, the bus 804 may implement at least one of an Inter-Integrated Circuit (I2C) bus, a Serial Peripheral Interface (SPI) bus, a PCI bus, or a PCIe bus. Additionally or alternatively, the bus 804 may implement any other type of computing or electrical bus. The cores 802 may obtain data, instructions, and/or signals from one or more external devices by example interface circuitry 806. The cores 802 may output data, instructions, and/or signals to the one or more external devices by the interface circuitry 806. Although the cores 802 of this example include example local memory 820 (e.g., Level 1 (L1) cache that may be split into an L1 data cache and an L1 instruction cache), the microprocessor 800 also includes example shared memory 810 that may be shared by the cores (e.g., Level 2 (L2_ cache)) for high-speed access to data and/or instructions. Data and/or instructions may be transferred (e.g., shared) by writing to and/or reading from the shared memory 810. The local memory 820 of each of the cores 802 and the shared memory 810 may be part of a hierarchy of storage devices including multiple levels of cache memory and the main memory (e.g., the main memory 714, 716 of FIG. 7). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 802 may be referred to as a CPU, DSP, GPU, etc., or any other type of hardware circuitry. Each core 802 includes control unit circuitry 814, arithmetic and logic (AL) circuitry (sometimes referred to as an ALU) 816, a plurality of registers 818, the L1 cache 820, and an example bus 822. Other structures may be present. For example, each core 802 may include vector unit circuitry, single instruction multiple data (SIMD) unit circuitry, load/store unit (LSU) circuitry, branch/jump unit circuitry, floating-point unit (FPU) circuitry, etc. The control unit circuitry 814 includes semiconductor-based circuits structured to control (e.g., coordinate) data movement within the corresponding core 802. The AL circuitry 816 includes semiconductor-based circuits structured to perform one or more mathematic and/or logic operations on the data within the corresponding core 802. The AL circuitry 816 of some examples performs integer based operations. In other examples, the AL circuitry 816 also performs floating point operations. In yet other examples, the AL circuitry 816 may include first AL circuitry that performs integer based operations and second AL circuitry that performs floating point operations. In some examples, the AL circuitry 816 may be referred to as an Arithmetic Logic Unit (ALU). The registers 818 are semiconductor-based structures to store data and/or instructions such as results of one or more of the operations performed by the AL circuitry 816 of the corresponding core 802. For example, the registers 818 may include vector register(s), SIMD register(s), general purpose register(s), flag register(s), segment register(s), machine specific register(s), instruction pointer register(s), control register(s), debug register(s), memory management register(s), machine check register(s), etc. The registers 818 may be arranged in a bank as shown in FIG. 8. Alternatively, the registers 818 may be organized in any other arrangement, format, or structure including distributed throughout the core 802 to shorten access time. The bus 822 may implement at least one of an I2C bus, a SPI bus, a PCI bus, or a PCIe bus.

Each core 802 and/or, more generally, the microprocessor 800 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 800 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

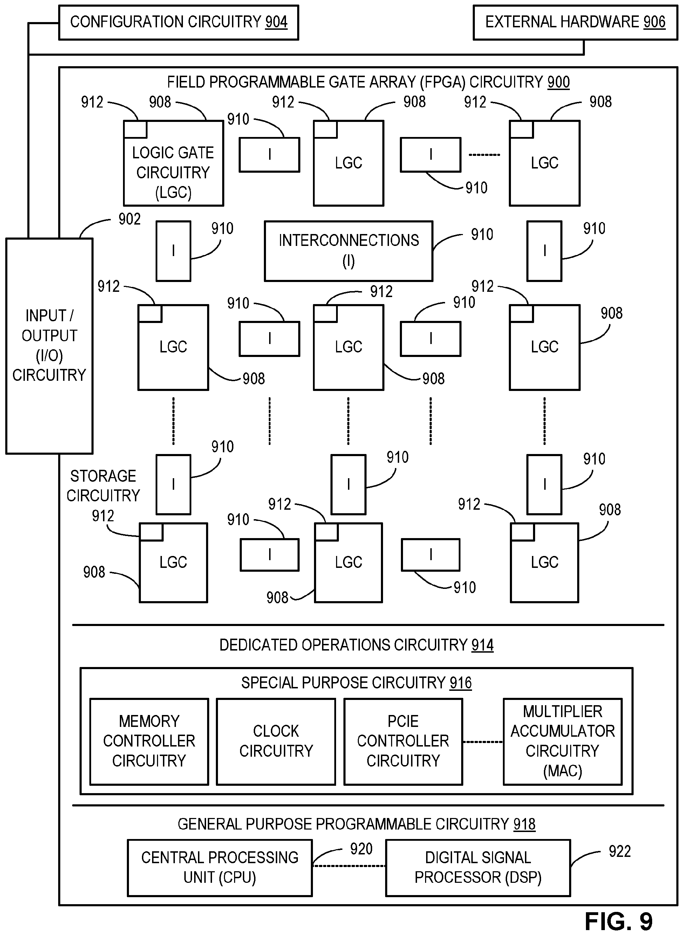

FIG. 9 is a block diagram of another example implementation of the processor circuitry 712 of FIG. 7. In this example, the processor circuitry 712 is implemented by FPGA circuitry 900. The FPGA circuitry 900 can be used, for example, to perform operations that could otherwise be performed by the example microprocessor 800 of FIG. 8 executing corresponding machine readable instructions. However, once configured, the FPGA circuitry 900 instantiates the machine readable instructions in hardware and, thus, can often execute the operations faster than they could be performed by a general purpose microprocessor executing the corresponding software.

More specifically, in contrast to the microprocessor 800 of FIG. 8 described above (which is a general purpose device that may be programmed to execute some or all of the machine readable instructions represented by the flowchart of FIG. 6 but whose interconnections and logic circuitry are fixed once fabricated), the FPGA circuitry 900 of the example of FIG. 9 includes interconnections and logic circuitry that may be configured and/or interconnected in different ways after fabrication to instantiate, for example, some or all of the machine readable instructions represented by the flowchart of FIG. 6. In particular, the FPGA 900 may be thought of as an array of logic gates, interconnections, and switches. The switches can be programmed to change how the logic gates are interconnected by the interconnections, effectively forming one or more dedicated logic circuits (unless and until the FPGA circuitry 900 is reprogrammed). The configured logic circuits enable the logic gates to cooperate in different ways to perform different operations on data received by input circuitry. Those operations may correspond to some or all of the software represented by the flowchart of FIG. 6. As such, the FPGA circuitry 900 may be structured to effectively instantiate some or all of the machine readable instructions of the flowchart of FIG. 6 as dedicated logic circuits to perform the operations corresponding to those software instructions in a dedicated manner analogous to an ASIC. Therefore, the FPGA circuitry 900 may perform the operations corresponding to the some or all of the machine readable instructions of FIG. 6 faster than the general purpose microprocessor can execute the same.

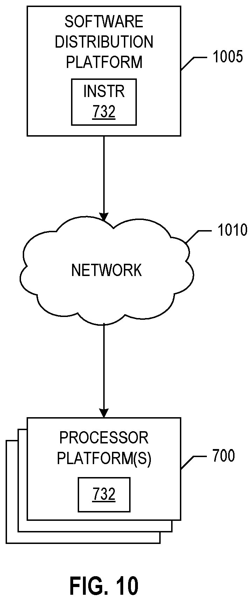

In the example of FIG. 9, the FPGA circuitry 900 is structured to be programmed (and/or reprogrammed one or more times) by an end user by a hardware description language (HDL) such as Verilog. The FPGA circuitry 900 of FIG. 9, includes example input/output (I/O) circuitry 902 to obtain and/or output data to/from example configuration circuitry 904 and/or external hardware (e.g., external hardware circuitry) 906. For example, the configuration circuitry 904 may implement interface circuitry that may obtain machine readable instructions to configure the FPGA circuitry 900, or portion(s) thereof. In some such examples, the configuration circuitry 904 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 906 may implement the microprocessor 800 of FIG. 8. The FPGA circuitry 900 also includes an array of example logic gate circuitry 908, a plurality of example configurable interconnections 910, and example storage circuitry 912. The logic gate circuitry 908 and interconnections 910 are configurable to instantiate one or more operations that may correspond to at least some of the machine readable instructions of FIGS. 10-12 and/or other desired operations. The logic gate circuitry 908 shown in FIG. 9 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 908 to enable configuration of the electrical structures and/or the logic gates to form circuits to perform desired operations. The logic gate circuitry 908 may include other electrical structures such as look-up tables (LUTs), registers (e.g., flip-flops or latches), multiplexers, etc.

The interconnections 910 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 908 to program desired logic circuits.

The storage circuitry 912 of the illustrated example is structured to store result(s) of the one or more of the operations performed by corresponding logic gates. The storage circuitry 912 may be implemented by registers or the like. In the illustrated example, the storage circuitry 912 is distributed amongst the logic gate circuitry 908 to facilitate access and increase execution speed.

The example FPGA circuitry 900 of FIG. 9 also includes example Dedicated Operations Circuitry 914. In this example, the Dedicated Operations Circuitry 914 includes special purpose circuitry 916 that may be invoked to implement commonly used functions to avoid the need to program those functions in the field. Examples of such special purpose circuitry 916 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 900 may also include example general purpose programmable circuitry 918 such as an example CPU 920 and/or an example DSP 922. Other general purpose programmable circuitry 918 may additionally or alternatively be present such as a GPU, an XPU, etc., that can be programmed to perform other operations.

As such, the example FPGA circuitry 900 can be used to (re)align and/or calibrate multi-laser alignment, stitching, other aspect of additive build execution, programming, etc., In certain examples, the FPGA circuitry 900 can be used for scoring and data processing, together and/or in further combination with hyper-logging of data/events, etc.

Although FIGS. 8 and 9 illustrate two example implementations of the processor circuitry 712 of FIG. 7, many other approaches are contemplated. For example, as mentioned above, modern FPGA circuitry may include an on-board CPU, such as one or more of the example CPU 920 of FIG. 9. Therefore, the processor circuitry 712 of FIG. 7 may additionally be implemented by combining the example microprocessor 800 of FIG. 8 and the example FPGA circuitry 900 of FIG. 9. In some such hybrid examples, a first portion of the machine readable instructions represented by the flowchart of FIG. 6 may be executed by one or more of the cores 802 of FIG. 8 and a second portion of the machine readable instructions represented by the flowchart of FIG. 6 may be executed by the FPGA circuitry 900 of FIG. 9.

A block diagram illustrating an example software distribution platform 1005 to distribute software such as the example machine readable instructions 732 of FIG. 7 to other hardware devices (e.g., hardware devices owned and/or operated by third parties from the owner and/or operator of the software distribution platform) is illustrated in FIG. 10. The example software distribution platform 1005 may be implemented by any computer server, data facility, cloud service, etc., capable of storing and transmitting software to other computing devices. The third parties may be customers of the entity owning and/or operating the software distribution platform 1005. For example, the entity that owns and/or operates the software distribution platform 1005 may be a developer, a seller, and/or a licensor of software such as the example machine readable instructions 732 of FIG. 7. The third parties may be consumers, users, retailers, OEMs, etc., who purchase and/or license the software for use and/or re-sale and/or sub-licensing. In the illustrated example, the software distribution platform 1005 includes one or more servers and one or more storage devices. The storage devices store the machine readable instructions 732, which may correspond to the example machine readable instructions of FIG. 6, as described above. The one or more servers of the example software distribution platform 1005 are in communication with an example network 1010, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 732 from the software distribution platform 1005. For example, the software, which may correspond to the example machine readable instructions of FIG. 6, may be downloaded to the example programmable circuitry platform 700, which is to execute the machine readable instructions 732 to implement the example flight path validation processor 420. In some examples, one or more servers of the software distribution platform 1005 periodically offer, transmit, and/or force updates to the software (e.g., the example machine readable instructions 732 of FIG. 7) to ensure improvements, patches, updates, etc., are distributed and applied to the software at the end user devices. Although referred to as software above, the distributed "software" could alternatively be firmware.

From the foregoing, it will be appreciated that the above disclosed methods, apparatus, and articles of manufacture have been disclosed to provide a new, improved apparatus and associated method for flight path validation. Image data, sensor data, historical data, and physics-based flight model(s) can be generated to automatically process and assess flyability and hazard posed by a flight path. The flight path can be a new flight path to be validated and/or an existing flight path to be revalidated, for example. Current approvals rely on actual flight and manual analysis and are unable to process the images and other data, as set forth herein, or model the flight path and its associated environment within a containment zone. Certain examples provide improved, faster, model-based approvals without the same risk to pilot, aircraft, and surroundings found in current approaches.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

Further aspects of the invention are provided by the subject matter of the following clauses:
An apparatus comprising: memory circuitry; at least one processor circuitry to be programmed by instructions to: process an input to determine a containment zone with a lower altitude limit and lateral boundaries for a flight path from a first location to a second location; generate a flyability assessment using a flight physics model, the flight physics model modeling movement of an aircraft through the containment zone along the flight path; generate a hazard assessment with respect to the containment zone along the flight path; process the flight path using the flyability assessment and the hazard assessment to determine a validation of the flight path; and output an indication of the validation of the flight path and a definition of the flight path.

The apparatus of any preceding clause, wherein the validation includes at least one of a validation of a new flight path or a re-validation of an existing flight path.

The apparatus of any preceding clause, wherein determining the validation includes accepting the flight path or rejecting the flight path.

The apparatus of any preceding clause, wherein the flight physics model is constructed from at least one of a weighted factor analysis or a trained artificial intelligence model.

The apparatus of any preceding clause, wherein the at least one processor circuitry is to determine a priority assessment for the flight path.

The apparatus of any preceding clause, wherein the output is provided to a flight management system.

The apparatus of any preceding clause, wherein generating the hazard assessment includes processing at least one of images or radar data to identify hazards within the containment zone along the flight path.

At least one non-transitory computer-readable storage medium including instructions that, when executed, cause at least one processor circuitry to at least: process an input to determine a containment zone with a lower altitude limit and lateral boundaries for a flight path from a first location to a second location; generate a flyability assessment using a flight physics model, the flight physics model modeling movement of an aircraft through the containment zone along the flight path; generate a hazard assessment with respect to the containment zone along the flight path; process the flight path using the flyability assessment and the hazard assessment to determine a validation of the flight path; and output an indication of the validation of the flight path and a definition of the flight path.

The at least one non-transitory computer-readable storage medium of any preceding clause, wherein the validation includes at least one of a validation of a new flight path or a re-validation of an existing flight path.

The at least one non-transitory computer-readable storage medium of any preceding clause, wherein determining the validation includes accepting the flight path or rejecting the flight path.

The at least one non-transitory computer-readable storage medium of any preceding clause, wherein the flight physics model is constructed from at least one of a weighted factor analysis or a trained artificial intelligence model.

The at least one non-transitory computer-readable storage medium of any preceding clause, wherein the instructions, when executed, further cause at least one processor circuitry is to determine a priority assessment for the flight path.

The at least one non-transitory computer-readable storage medium of any preceding clause, wherein the output is provided to a flight management system.

The at least one non-transitory computer-readable storage medium of any preceding clause, wherein generating the hazard assessment includes processing at least one of images or radar data to identify hazards within the containment zone along the flight path.

A computer-implemented method of flight path validation, the method comprising: processing, by executing an instruction using at least one processor circuit, an input to determine a containment zone with a lower altitude limit for a flight path from a first location to a second location; generating, by executing an instruction using the at least one processor circuit, a flyability assessment using a flight physics model, the flight physics model modeling movement of an aircraft through the containment zone along the flight path; generating, by executing an instruction using the at least one processor circuit, a hazard assessment with respect to the containment zone along the flight path; processing, by executing an instruction using the at least one processor circuit, the flight path using the flyability assessment and the hazard assessment to determine a validation of the flight path; and outputting, by executing an instruction using the at least one processor circuit, an indication of the validation of the flight path and a definition of the flight path.

The method of any preceding clause, wherein determining the validation includes accepting the flight path or rejecting the flight path.

The method of any preceding clause, further including constructing the flight physics model from at least one of a weighted factor analysis or a trained artificial intelligence model.

The method of any preceding clause, further including determining a priority assessment for the flight path.

The method of any preceding clause, wherein outputting includes outputting to a flight management system.

The method of any preceding clause, wherein generating the hazard assessment includes processing at least one of images or radar data to identify hazards within the containment zone along the flight path.

## Claims

1. An apparatus comprising:
memory circuitry (713, 714, 716);
at least one processor circuitry (712) to be programmed by instructions to:
process an input to determine a containment zone with a lower altitude limit and lateral boundaries for a flight path from a first location to a second location;
generate a flyability assessment using a flight physics model (424, 520), the flight physics model modeling movement of an aircraft through the containment zone along the flight path;
generate a hazard assessment with respect to the containment zone along the flight path;
process the flight path using the flyability assessment and the hazard assessment to determine a validation of the flight path; and
output an indication of the validation of the flight path and a definition of the flight path.

2. The apparatus of claim 1, wherein the validation includes at least one of a validation of a new flight path or a re-validation of an existing flight path.

3. The apparatus of any preceding claim, wherein determining the validation includes accepting the flight path or rejecting the flight path.

4. The apparatus of any preceding claim, wherein the flight physics model is constructed from at least one of a weighted factor analysis or a trained artificial intelligence model.

5. The apparatus of any preceding claim, wherein the at least one processor circuitry is to determine a priority assessment for the flight path.

6. The apparatus of any preceding claim, wherein the output is provided to a flight management system (32).

7. The apparatus of any preceding claim, wherein generating the hazard assessment includes processing at least one of images or radar data to identify hazards within the containment zone along the flight path.

8. A computer-implemented method of flight path validation, the method comprising:
processing, by executing an instruction using at least one processor circuit (700), an input to determine a containment zone with a lower altitude limit and lateral boundaries for a flight path from a first location to a second location;
generating, by executing an instruction using the at least one processor circuit, a flyability assessment using a flight physics model (424, 520), the flight physics model modeling movement of an aircraft through the containment zone along the flight path;
generating, by executing an instruction using the at least one processor circuit, a hazard assessment with respect to the containment zone along the flight path;
processing, by executing an instruction using the at least one processor circuit, the flight path using the flyability assessment and the hazard assessment to determine a validation of the flight path; and
outputting, by executing an instruction using the at least one processor circuit, an indication of the validation of the flight path and a definition of the flight path.

9. The method of claim 8, wherein determining the validation includes accepting the flight path or rejecting the flight path.

10. The method of claim 8 or 9, further including constructing the flight physics model from at least one of a weighted factor analysis or a trained artificial intelligence model.

11. The method of any of claims 8 to 10, further including determining a priority assessment for the flight path.

12. The method of any of claims 8 to 11, wherein outputting includes outputting to a flight management system.

13. The method of any of claims 8 to 12, wherein generating the hazard assessment includes processing at least one of images or radar data to identify hazards within the containment zone along the flight path.

14. At least one non-transitory computer-readable storage medium including instructions that, when executed, cause at least one processor circuitry to at least implement the method of any of claims 8 to 13.
